# EUROPEAN PATENT APPLICATION

(11) **EP 4 350 804 A1**
(43) Date of publication of application: **10.04.2024**
(21) Application number: 22923460.4
(22) Date of filing: 01.12.2022
(51) Int. Cl.: H01M 4/131, H01M 10/0525

(54) **POSITIVE ELECTRODE ACTIVE MATERIAL, PREPARATION METHOD THEREFOR, AND SECONDARY BATTERY AND ELECTRIC DEVICE COMPRISING SAME**

(30) Priority: 27.01.2022 CN 202210099496
(71) Applicant: Contemporary Amperex Technology Co., Limited, Ningde City, Fujian 352100 (CN)
(72) Inventor: WU, Zeli, Ningde City, Fujian 352100 (CN); HAN, Changlong, Ningde City, Fujian 352100 (CN); HUANG, Lei, Ningde City, Fujian 352100 (CN); ZHANG, Cuiping, Ningde City, Fujian 352100 (CN); JIANG, Bin, Ningde City, Fujian 352100 (CN); GUO, Jie, Ningde City, Fujian 352100 (CN); CHEN, Peipei, Ningde City, Fujian 352100 (CN); HUANG, Junyuan, Ningde City, Fujian 352100 (CN); CHEN, Huiling, Ningde City, Fujian 352100 (CN); WENG, Xiaolin, Ningde City, Fujian 352100 (CN)
(74) Representative: Kraus & Lederer PartGmbB
(86) International application number: PCT/CN2022/135786
(87) International publication number: WO 2023/142669

(57) **Abstract**

The present application provides a positive electrode active material, a method for the preparation thereof, and a secondary battery and an electrical device. The positive electrode active material includes a positive electrode active material matrix and a protective layer arranged on the surface of the positive electrode active material matrix and containing perfluoropolyether with a number average molecular weight of 200 to 16000. The secondary battery has high energy density and good dynamic performance, as well as good high-temperature cycling performance and high-temperature storage performance.

## Description

### CROSS-REFERENCE TO RELATED APPLICATIONS

This application claims priority to Chinese Patent Application No. 202210099496.7, filed on January 27, 2022, and entitled "POSITIVE ELECTRODE ACTIVE MATERIAL, METHOD FOR PREPARATION THEREOF, SECONDARY BATTERY AND ELECTRICAL DEVICE", the entire contents of which are incorporated herein by reference.

### TECHNICAL FIELD

The present application belongs to the technical field of batteries, in particular to a positive electrode active material, a method for the preparation thereof, a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their energy density, service life and safety performance, especially in high-temperature environment, have attracted more and more attention.

### SUMMARY

An object of the present application is to provide a positive electrode active material, a method for the preparation thereof, and a secondary battery and an electrical device. The secondary battery has high energy density and good dynamic performance, as well as good high-temperature cycling performance and high-temperature storage performance.

A first aspect of the present application provides a positive electrode active material comprising a positive electrode active material matrix and a protective layer, wherein the protective layer is arranged on the surface of the positive electrode active material matrix and comprises perfluoropolyether with a number average molecular weight of 200 to 16000.

After a lot of research and practice, the inventors unexpectedly found that perfluoropolyether with suitable number average molecular weight used as the protective layer of the positive electrode active material can not only improve the high-temperature storage performance and high-temperature cycling performance of the secondary battery, but also enable the secondary battery to have the high energy density and good dynamic performance. Although the mechanism is unclear yet, the inventors of the present application speculate that the possible reasons are as follows: firstly, perfluoropolyether has a high content of fluorine atoms in the molecular structure and high oxidation resistance, thereby reducing the erosion of an electrolytic solution on the positive electrode active material, so as to reduce the leaching out of transition metal ions and a series of resultant side reactions, such as destruction of the crystal structure of the positive electrode active material, poor capacity exertion, reduced energy density of secondary battery, and increased internal resistance of battery; and secondly, perfluoropolyether is disposed on the surface of the positive electrode active material matrix, and has a low solubility or is almost insoluble in an electrolytic solution, and thus it will not affect the performance of the electrolytic solution. Therefore, the secondary battery may have high energy density and good dynamic performance.

In some embodiments of the present application, the perfluoropolyether has a number average molecular weight of 2000 to 10000. The perfluoropolyether having a number average molecular weight within a suitable range allows high electrochemical stability and thermal stability, and a low solubility or is almost insoluble in the electrolytic solution, so that it can not only improve the high-temperature storage performance and high-temperature cycling performance of secondary battery, but also enable the secondary battery to have high energy density and good dynamic performance.

In some embodiments of the present application, the perfluoropolyether is present in a weight percentage of ≤ 2%, based on the total weight of the positive electrode active material. Generally, the perfluoropolyether has a high viscosity, so its content in the positive electrode active material should not be too high. If the content of the perfluoropolyether is high, the interface impedance of the positive electrode may increase and the transmission rate of the active ions may decrease, which may then affect the energy density, cycling performance and dynamic performance of the secondary battery. Optionally, the perfluoropolyether is present in a weight percentage of 0.5% to 2%.

In some embodiments of the present application, the perfluoropolyether comprises a plurality of structural units distributed along the molecular chain, and the structural unit is selected from a group consisting of one or at least two of the following structural units:
(a) (CFXO), X represents F or CF₃,
(b) (CF₂CF₂O),
(c) (C₃F₆O),
(d) (C₄F₈O),
(e) (C₅F₁₀O),
a number of each of the above structural units is each independently selected from 0 or an integer above 1.

In some embodiments of the present application, (C₃F₆O) is (CF₂CF₂CF₂O), [C(CF₃)FCF₂O] or [CF₂C(CF₃)FO].

In some embodiments of the present application, (C₄F₈O) is (CF₂CF₂CF₂CF₂O), or [C(CF₂CF₃)FCF₂O].

In some embodiments of the present application, (C₅F₁₀O) is [C(CF₂CF₃)FCF₂CF₂O].

In some embodiments of the present application, the perfluoropolyether has a general formula of Rₐ-(R)ₘ-(CF₂O)ₙ-(CF₂)_{y}-R_{b} or Rₐ-(R)ₘ-(CF₂)_{y}-R_{b}, wherein R each independently represents C(R_{f})F(CF₂)ₓO or (CF₂)ₓC(R_{f})FO, Rf represents F, CF₃, CF₂CF₃, CF₂CF₂CF₃, or CF(CF₃)CF₃, x represents 1, 2, or 3, and R has a number of carbon atoms of less than or equal to 5, Rₐ represents F, CF₃, CF₂CF₃, CF₂CF₂CF₃, CF(CF₃)CF₃, OCF₃, OCF₂CF₃, OCF₂CF₂CF₃, OCF(CF₃)CF₃, CF₂COF, CF₂CF₂COF, or CF(CF₃)COF; R_{b} represents F, CF₃, CF₂CF₃, CF₂CF₂CF₃, CF(CF₃)CF₃, CF₂COF, CF₂CF₂COF, or CF(CF₃)COF; m represents an integer between 1 and 135, n represents an integer between 1 and 175, and y represents 0, 1, 2, or 3.

In some embodiments of the present application, Rf represents F, CF₃, or CF₂CF₃.

In some embodiments of the present application, m represents an integer between 3 and 85. Optionally, m represents an integer between 3 and 45.

In some embodiments of the present application, n represents an integer between 3 and 85. Optionally, n represents an integer between 3 and 45.

In some embodiments of the present application, m/n is 0.2 to 25. Optionally, m/n is 0.8 to 1.2. If the content of (CF₂O) group is higher, the perfluoropolyether has a slightly lower thermal stability, and if the content of (R) group is higher, the perfluoropolyether has an increased viscosity, and the difficulty of the cladding process increases.

In some embodiments of the present application, (R) and (CF₂O) are randomly distributed.

In some embodiments of the present application, R each independently represents (CF₂CF₂O), (CF₂CF₂CF₂O), (CF₂CF₂CF₂CF₂O), [C(CF₃)FCF₂O], [C(CF₂CF₃)FCF₂O], or [C(CF₂CF₃)FCF₂CF₂O].

In some embodiments of the present application, the perfluoropolyether comprises at least one compound of Formula 1 to Formula 9,

Rₐ-(CF₂CF₂CF₂O)ₘ-(CF₂O)ₙ-(CF₂)_{y}-R_{b} Formula 1

Rₐ-[C(CF₃)FCF₂O]ₘ-(CF₂O)ₙ-(CF₂)_{y}-R_{b} Formula 2

Rₐ-[C(CF₂CF₃)FCF₂O]ₘ-(CF₂O)ₙ-(CF₂)_{y}-R_{b} Formula 3

Rₐ-[C(CF₂CF₃)FCF₂CF₂O]ₘ-(CF₂O)ₙ-(CF₂)_{y}-R_{b} Formula 4

Rₐ-(CF₂CF₂O)ₘ-(CF₂O)ₙ-(CF₂)_{y}-R_{b} Formula 5

Rₐ-[C(CF₃)FCF₂O]ₘ-(CF₂)_{y}-R_{b} Formula 6

Rₐ-(CF₂CF₂CF₂O)ₘ-(CF₂)_{y}-R_{b} Formula 7

Rₐ-(CF₂CF₂O)ₘ-(CF₂)_{y}-R_{b} Formula 8

Rₐ-(CF₂CF₂CF₂CF₂O)ₘ-(CF₂)_{y}-R_{b} Formula 9.

In some embodiments of the present application, the perfluoropolyether comprises at least one of the following compounds: CF₃O(CF₂CF₂CF₂O)ₘ(CF₂O)ₙCF₃, CF₃CF₂O(CF₂CF₂CF₂O)ₘ(CF₂O)ₙCF₃, CF₃CF₂O(CF₂CF₂CF₂O)ₘ(CF₂O)ₙ(CF₂)₂C(CF₃)FCF₃, CF₃(CF₂CF₂CF₂O)ₘ(CF₂O)ₙCF₂CF₃, CF₃O[C(CF₃)FCF₂O]ₘ(CF₂O)ₙCF₃, CF₃O[C(CF₃)FCF₂O]ₘ(CF₂O)ₙCF₂CF₂CF₃, CF₃[C(CF₃)FCF₂O]ₘ(CF₂O)ₙCF₂CF₃, CF₃CF₂[C(CF₃)FCF₂O]ₘ(CF₂O)ₙCF₂CF₃, CF₃C(CF₃)F[C(CF₂CF₃)FCF₂O]ₘ(CF₂O)ₙ(CF₂)₃CF(CF₃)CF₃, CF₃C(CF₃)F[C(CF₂CF₃)FCF₂O]ₘ(CF₂O)ₙ(CF₂)₂CF(CF₃)CF₃, CF₃CF(CF₃)O[C(CF₂CF₃)FCF₂CF₂O]ₘ(CF₂O)ₙ(CF₂)₂CF(CF₃)CF₃, F(CF₂CF₂O)ₘ(CF₂O)ₙF, CF₃(CF₂CF₂O)ₘ(CF₂O)ₙ(CF₂)₂CF₃, CF₃O(CF₂CF₂O)ₘ(CF₂O)ₙCF₃, CF₃CF₂CF₂O[C(CF₃)FCF₂O]ₘCF(CF₃)CF₃, CF₃CF₂CF₂O[C(CF₃)FCF₂O]ₘCF(CF₃)COF, CF₃CF₂CF₂O(CF₂CF₂CF₂O)ₘCF₂CF₃, F(CF₂CF₂O)ₘF, or F(CF₂CF₂CF₂CF₂O)ₘF.

In some embodiments of the present application, the positive electrode active material matrix comprises a material capable of shedding and embedding an active ion. Optionally, the active ion comprises at least one of lithium ion, or sodium ion. Further optionally, the active ion comprises lithium ion.

A second aspect of the present application provides a method for preparing a positive electrode active material, comprising the following steps:
S101, providing a positive electrode active material matrix and perfluoropolyether with a number average molecular weight of 200 to 16000; and
S 102, adding the positive electrode active material matrix and the perfluoropolyether to a solvent, and then dispersing evenly, standing, filtering and drying, to obtain a positive electrode active material.

The method for preparing a positive electrode active material of the present application has advantages of simple process, good product consistency, and easy to realize large-scale production.

A third aspect of the present application provides a secondary battery comprising a positive electrode plate, a negative electrode plate and an electrolytic solution, wherein the positive electrode plate comprises the positive electrode active material of the first aspect of the present application, or the positive electrode active material prepared by the method of the second aspect of the present application.

In some embodiments of the present application, the electrolytic solution comprises at least one of lithium difluorophosphate, and lithium difluoro(oxalato)borate. After a lot of research, the inventors of the present application found that adding at least one of lithium difluorophosphate and lithium difluoro(oxalato)borate to the electrolytic solution can reduce the interface impedance of the positive electrode, increase the migration rate of the active ions, and improve the cycling performance and dynamic performance of secondary battery.

In some embodiments of the present application, the lithium difluorophosphate is present in a weight percentage of ≤2%, based on the total weight of the electrolytic solution. The lithium difluorophosphate has a poor solubility in the electrolytic solution. If the added amount of lithium difluorophosphate is too high, it will deteriorate the viscosity of the electrolytic solution, thereby reducing the ionic conductivity of the electrolytic solution to a certain extent. Therefore, the added amount of lithium difluorophosphate should not be too high.

In some embodiments of the present application, the lithium difluoro(oxalato)borate is present in a weight percentage of ≤2%, based on the total weight of the electrolytic solution. Lithium difluoro(oxalato)borate itself is not resistant to oxidation. If the added amount of lithium difluoro(oxalato)borate is too high, it will deteriorate the storage performance of the secondary battery, especially at high temperature. Therefore, the added amount of lithium difluoro(oxalato)borate should not be too high.

A fourth aspect of the present application provides an electrical device comprising a secondary battery of the third aspect of the present application.

The secondary battery of the present application comprises a positive electrode active material using the perfluoropolyether having a suitable number average molecular weight as a protective layer, which allows high energy density and good dynamic performance, as well as good high-temperature cycling performance and high-temperature storage performance. The electrical device of the present application comprises a secondary battery provided in the present application, and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of a secondary battery according to an embodiment of the present application.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.

### DETAILED DESCRIPTION

Hereinafter, embodiments of the positive electrode active material, the method for the preparation thereof, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, unless otherwise stated, the terms such as "first" and "second" are used only for descriptive purposes and are not to be understood to indicate or imply relative importance or to implicitly indicate the number of technical features indicated. The term "more" means two or more unless expressly and specifically defined otherwise.

In the present application herein, unless otherwise stated, the term "active ions" refers to ions that can be embedded and shed back and forth between the positive and negative electrodes of a secondary battery, including but not limited to, lithium ions, sodium ions, etc.

In the present application herein, unless otherwise stated, the term "perfluoropolyether (PFPE)" is a class of perfluorinated polymers with a molecular structure consisting of only three elements, C, F, and O.

A secondary battery, also known as rechargeable battery or storage battery, refers to the battery that can continue to be used by activating the active material by means of changing after the battery has been discharged. In general, the secondary battery includes a positive electrode plate, a negative electrode plate, an electrolytic solution, and a separator. During the charging and discharging process of the battery, active ions are embedded and shed back and forth between the positive electrode plate and the negative electrode plate. The separator is arranged between the positive electrode plate and the negative electrode plate, which mainly functions to prevent the short circuit of the positive and negative electrodes and allows the active ions to pass through at the same time. The electrolytic solution functions to conduct active ions between the positive electrode plate and the negative electrode plate. The present application has no particular limitation on the type of the secondary battery, for example, the secondary battery may be a lithium ion battery, a sodium ion battery, etc., in particular, the secondary battery is a lithium ion secondary battery.

At present, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their energy density becomes higher, and the charging and discharging current becomes larger, which easily leads to the heating of the battery in the process of using the secondary battery, reduces the cycling performance and storage performance of the secondary battery, and even causes safety risks. Therefore, it is necessary to provide a secondary battery with good entire performance, especially with good high-temperature performance.

In order to improve the high-temperature performance of secondary batteries, the common strategy usually adopted by the prior art is to add additives to the electrolytic solution to improve the stability of the electrolytic solution. However, if the amount of additives is small, it can not effectively improve the high-temperature performance of the secondary battery; and if the amount of additives is large, it is easy to increase the viscosity of the electrolytic solution and change the dynamic performance of the electrolytic solution, thereby affecting the dynamic performance of the secondary battery.

In view of the above problems, after a lot of research and practice, the inventors proposed a new positive electrode active material, which allows the secondary battery to have high energy density and good dynamic performance, as well as good high-temperature cycling performance and high-temperature storage performance.

### Positive electrode active material

A first aspect of the present application provides a positive electrode active material comprising a positive electrode active material matrix and a protective layer, wherein the protective layer is arranged on the surface of the positive electrode active material matrix and comprises perfluoropolyether with a number average molecular weight of 200 to 16000.

When the secondary battery is in a high temperature environment, the electrolytic solution has worse stability, aggravated oxidation and decomposition, and the side reactions inside the battery increase, thus the internal resistance and the internal gas production of the battery increase to different degrees. In addition, the water in the electrode plate will be gradually released into the electrolytic solution during the charging and discharging process of the secondary battery and react with electrolyte salt to generate HF, and the content of HF in the electrolytic solution increases significantly when the secondary battery is in a high temperature environment, and the electrolytic solution will continue to erode the positive electrode active material, resulting in the positive electrolytic solution having poorer stability and increased oxidative decomposition, thus increasing the internal resistance and internal gas production to different degrees. The HF content in an electrolytic solution increases significantly when the secondary battery is in a high temperature environment, and the electrolytic solution will continuously erode the positive electrode active material, resulting in the leaching out of transition metal ions in the crystal structure of the positive electrode active material. After the leaching out of transition metal ions, the original orderly lattice structure of the positive electrode active material is destroyed (e.g., lattice distortion, crystal surface slippage, etc.), which on the one hand leads to the reduction of charging capacity in the high voltage region, and on the other hand the causes an increase of contact impedance between the positive electrode active material and the positive electrode active material and a decrease in the migration rate of active ions. At the same time, the transition metal ions leached from the positive electrode active material will be deposited on the surface of the negative electrode after diffusion to the negative electrode through an electrolytic solution, and destroy the negative electrode interface, thereby deteriorating the electrochemical performance of the negative electrode.

Ether compounds are not suitable for use in secondary batteries due to their poor stability and narrow electrochemical window. Fluorine ether compounds (such as hydrofluoroethers) have the properties of high oxidation and good electrochemical stability due to the introduction of fluorine atoms in the molecular structure, so they are generally used as cosolvents or additives of the electrolytic solution, and mainly used to improve the stability of the electrolytic solution and the low temperature performance of secondary battery, and can also improve the high temperature storage performance of secondary battery to a certain extent. However, usually, the fluorine ether compounds have high viscosity, poor solubility in the electrolytic solution, and poor compatibility of fluoride ether compounds with the negative electrode. Therefore, the use of fluorine ether compounds in the electrolytic solution will bring some other adverse effects, for example, affecting the capacity exertion of the secondary battery, reducing the energy density of the secondary battery, and deteriorating the dynamic performance of the secondary battery.

After a lot of research and practice, the inventors unexpectedly found that perfluoropolyether with suitable number average molecular weight used as the protective layer of the positive electrode active material can not only improve the high-temperature storage performance and high-temperature cycling performance of the secondary battery, but also enable the secondary battery to have the high energy density and good dynamic performance. Although the mechanism is unclear yet, the inventors of the present application speculate that the possible reasons are as follows: firstly, perfluoropolyether has a high content of fluorine atoms in the molecular structure and high oxidation resistance, so as to reduce the erosion of an electrolytic solution on the positive electrode active material, so as to reduce the leaching out of transition metal ions and a series of resultant side reactions, such as destruction of the crystal structure of the positive electrode active material, poor capacity exertion, reduced energy density of secondary battery, and increased internal resistance of battery; and secondly, perfluoropolyether is disposed on the surface of the positive electrode active material matrix, and has a low solubility or is almost insoluble in the electrolytic solution, and thus it will not affect the performance of the electrolytic solution. Therefore, the secondary battery may have high energy density and good dynamic performance.

The perfluorofluoride used in the positive electrode active material of the present application has a suitable number average molecular weight, so that the following conditions can be avoided: if the perfluoropolyether has a number average molecular weight of lower than 200, it may lead to a poor electrochemical stability, poor oxidation resistance, and easy to dissolve into the electrolytic solution, and can not effectively reduce the erosion of the electrolytic solution on the positive electrode active material, so the improvement effect on the high-temperature cycling performance and high-temperature storage performance of the secondary battery is not good; and if the perfluoropolyether has a number average molecular weight of higher than 16000, it may lead to too long molecular chain and poor thermal stability, so the improvement effect on the high-temperature cycling performance and highgtemperature storage performance of the secondary battery is not good; if the perfluoropolyether has a number average molecular weight of higher than 16000, the perfluoropolyether has a higher viscosity, and the cladding process is more difficult.

In some embodiments, optionally, the perfluoropolyether has a number average molecular weight of 500-16000, 800-16000, 1000-16000, 1500-16000, 2000-16000, 500-15000, 800-15000, 1000-15000, 1500-15000, 2000-15000, 500-12000, 800-12000, 1000-12000, 1500-12000, 2000-12000, 500-10000, 800-10000, 1000-10000, 1500-10000, 500-8000, 800-8000, 1000-8000, 1500-8000, 2000-8000, 500-6000, 800-6000, 1000-6000, 1500-6000, or 2000-6000. If the perfluoropolyether has a number average molecular weight within a suitable range, the perfluoropolyether has a high electrochemical stability and thermal stability, and has a low solubility or is almost insoluble in the electrolytic solution, so that it can not only improve the high-temperature storage performance and high-temperature cycling performance of secondary battery, but also enable the secondary battery to have high energy density and good dynamic performance.

In the present application, the number average molecular weight of the perfluoropolyether has a meaning known in the art and can be determined by an instrument and method known in the art. For example, it can be determined by gel permeation chromatography (GPC).

Generally, the perfluoropolyether has a high viscosity, so its content in the positive electrode active material should not be too high. If the content of the perfluoropolyether is high, the interface impedance of the positive electrode may increase and the transmission rate of the active ions may decrease, which may then affect the energy density, cycling performance and dynamic performance of the secondary battery. In some embodiments, the perfluoropolyether is present in a weight percentage of ≤2%, based on the total weight of the positive electrode active material. Optionally, the perfluoropolyether is present in a weight percentage of ≤1.8%, ≤1.6%, ≤1.4%, ≤1.2%, ≤1%, ≤0.8%, or ≤0.6%.

Meanwhile, the content of the perfluoropolyether in the positive electrode active material should not be too low. If the content of perfluoropolyether is low, it may not effectively reduce the erosion of the electrolytic solution to the positive electrode active material, so the improvement effect on the high-temperature cycling performance and high-temperature storage performance of the secondary battery is not significant. In some embodiments, optionally, the perfluoropolyether is present in a weight percentage of 0.1%-2%, 0.2%-2%, 0.3%-2%, 0.4%-2%, 0.5%-2%, 0.1%-1.8%, 0.2%-1.8%, 0.3%-1.8%, 0.4%-1.8%, 0.5%-1.8%, 0.1%-1.4%, 0.2%-1.4%, 0.3%-1.4%, 0.4%-1.4%, 0.5%-1.4%, 0.1%-1%, 0.2%-1%, 0.3%-1%, 0.4%-1%, or 0.5%-1%.

The protective layer may be disposed on part or all of the surface of the positive electrode active material matrix particles. In some embodiments, the protective layer can be disposed on 80% to 100% of the surface of the positive electrode active material matrix particles. Optionally, the protective layer may be disposed at 95% to 100% of the surface of the positive electrode active material matrix particles. Further optionally, the protective layer may be disposed on all surfaces of the positive electrode active material matrix particles.

When most or all of the surface of the positive electrode active material substrate has the protective layer, it can effectively reduce the erosion of the electrolytic solution on the positive electrode active material matrix, reduce the leaching out of transition metal ions and a series of resultant side reactions, thereby further improving the high-temperature storage performance and high-temperature cycling performance of the secondary battery.

In some embodiments, the perfluoropolyether may be a saturated perfluoropolyether.

In some embodiments, the molecular structure of the perfluoropolyether may be a liner chain structure or a branched chain structure. Optionally, the molecular structure of the perfluoropolyether is a linear chain structure, and the perfluoropolyether with a linear chain structure has higher oxidation resistance, further reduces the erosion of the electrolytic solution on the positive electrode active material matrix, reduces the leaching out of transition metal ions and a series of resultant side reactions, thereby further improving the high-temperature storage performance and high-temperature cycling performance of the secondary battery.

In some embodiments, the perfluoropolyether comprises a plurality of structural units distributed along the molecular chain, and the structural unit is selected from a group consisting of one or at least two of the following structural units:
(a) (CFXO), X represents F or CF₃,
(b) (CF₂CF₂O),
(c) (C₃F₆O),
(d) (C₄F₈O),
(e) (C₅F₁₀O),
a number of each of the above structural units is each independently selected from 0 or an integer above 1, and the number of the above structural units is configured such that the number average molecular weight of the perfluoropolyether satisfies the above ranges of the present application. Each of the above structural units can be randomly distributed in the molecular chain.

Optionally, (C₃F₆O) is (CF₂CF₂CF₂O), [C(CF₃)FCF₂O] or [CF₂C(CF₃)FO].

Optionally, (C₄F₈O) is (CF₂CF₂CF₂CF₂O), or [C(CF₂CF₃)FCF₂O].

Optionally, (C₅F₁₀O) is [C(CF₂CF₃)FCF₂CF₂O].

In some embodiments, the perfluoropolyether has a general formula of Rₐ-(R)ₘ-(CF₂O)ₙ-(CF₂)_{y}-R_{b} or Rₐ-(R)ₘ-(CF₂)_{y}-R_{b}, wherein R each independently represents C(R_{f})F(CF₂)ₓO or (CF₂)ₓC(R_{f})FO, Rf represents F, CF₃, CF₂CF₃, CF₂CF₂CF₃, or CF(CF₃)CF₃, x represents 1, 2, or 3, and R has a number of carbon atoms of less than or equal to 5, Rₐ represents F, CF₃, CF₂CF₃, CF₂CF₂CF₃, CF(CF₃)CF₃, OCF₃, OCF₂CF₃, OCF₂CF₂CF₃, OCF(CF₃)CF₃, CF₂COF, CF₂CF₂COF, or CF(CF₃)COF; R_{b} represents F, CF₃, CF₂CF₃, CF₂CF₂CF₃, CF(CF₃)CF₃, CF₂COF, CF₂CF₂COF, or CF(CF₃)COF; m represents an integer between 1 and 135, n represents an integer between 1 and 175, and y represents 0, 1, 2, or 3.

Optionally, (R) and (CF₂O) are randomly distributed.

Optionally, Rf represents F, CF₃, or CF₂CF₃.

Optionally, R each independently represents (CF₂CF₂O), (CF₂CF₂CF₂O), (CF₂CF₂CF₂CF₂O), [C(CF₃)FCF₂O], [C(CF₂CF₃)FCF₂O], or [C(CF₂CF₃)FCF₂CF₂O].

In some embodiments, the perfluoropolyether comprises at least one compound of Formula 1 to Formula 9,

Rₐ-(CF₂CF₂CF₂O)ₘ-(CF₂O)ₙ-(CF₂)_{y}-R_{b} Formula 1

Rₐ-[C(CF₃)FCF₂O]ₘ-(CF₂O)ₙ-(CF₂)_{y}-R_{b} Formula 2

Rₐ-[C(CF₂CF₃)FCF₂O]ₘ-(CF₂O)ₙ-(CF₂)_{y}-R_{b} Formula 3

Rₐ-[C(CF₂CF₃)FCF₂CF₂O]ₘ-(CF₂O)ₙ-(CF₂)_{y}-R_{b} Formula 4

Rₐ-(CF₂CF₂O)ₘ-(CF₂O)ₙ-(CF₂)_{y}-R_{b} Formula 5

Rₐ-[C(CF₃)FCF₂O]ₘ-(CF₂)_{y}-R_{b} Formula 6

Rₐ-(CF₂CF₂CF₂O)ₘ-(CF₂)_{y}-R_{b} Formula 7

Rₐ-(CF₂CF₂O)ₘ-(CF₂)_{y}-R_{b} Formula 8

Rₐ-(CF₂CF₂CF₂CF₂O)ₘ-(CF₂)_{y}-R_{b} Formula 9.

As an example, the perfluoropolyether comprises at least one of the following compounds: CF₃O(CF₂CF₂CF₂O)ₘ(CF₂O)ₙCF₃, CF₃CF₂O(CF₂CF₂CF₂O)ₘ(CF₂O)ₙCF₃, CF₃CF₂O(CF₂CF₂CF₂O)ₘ(CF₂O)ₙ(CF₂)₂C(CF₃)FCF₃, CF₃(CF₂CF₂CF₂O)ₘ(CF₂O)ₙCF₂CF₃, CF₃O[C(CF₃)FCF₂O]ₘ(CF₂O)ₙCF₃, CF₃O[C(CF₃)FCF₂O]ₘ(CF₂O)ₙCF₂CF₂CF₃, CF₃[C(CF₃)FCF₂O]ₘ(CF₂O)ₙCF₂CF₃, CF₃CF₂[C(CF₃)FCF₂O]ₘ(CF₂O)ₙCF₂CF₃, CF₃C(CF₃)F[C(CF₂CF₃)FCF₂O]ₘ(CF₂O)ₙ(CF₂)₃CF(CF₃)CF₃, CF₃C(CF₃)F[C(CF₂CF₃)FCF₂O]ₘ(CF₂O)ₙ(CF₂)₂CF(CF₃)CF₃, CF₃CF(CF₃)O[C(CF₂CF₃)FCF₂CF₂O]ₘ(CF₂O)ₙ(CF₂)₂CF(CF₃)CF₃, F(CF₂CF₂O)ₘ(CF₂O)ₙF, CF₃(CF₂CF₂O)ₘ(CF₂O)ₙ(CF₂)₂CF₃, CF₃O(CF₂CF₂O)ₘ(CF₂O)ₙCF₃, CF₃CF₂CF₂O[C(CF₃)FCF₂O]ₘCF(CF₃)CF₃, CF₃CF₂CF₂O[C(CF₃)FCF₂O]ₘCF(CF₃)COF, CF₃CF₂CF₂O(CF₂CF₂CF₂O)ₘCF₂CF₃, F(CF₂CF₂O)ₘF, or F(CF₂CF₂CF₂CF₂O)ₘF.

In some embodiments, m represents an integer between 3 and 120. Optionally, m represents an integer between 3 and 100. Further optionally, m represents an integer between 3 and 85. Further optionally, m represents an integer between 3 and 68. In particular, m represents an integer between 3 and 45.

In some embodiments, n represents an integer between 3 and 120. Optionally, n represents an integer between 3 and 100. Further optionally, n represents an integer between 3 and 85. Further optionally, n represents an integer between 3 and 68. In particular, n represents an integer between 3 and 45.

In some embodiments, m/n is 0.2 to 25. Optionally, m/n is 0.5-25, 0.8-25, 1-25, 1.2-25, 0.2-15, 0.5-15, 0.8-15, 1-15, 1.2-15, 0.2-5, 0.5-5, 0.8-5, 1-5, 1.2-5, 0.2-1.5, 0.5-1.5, 0.8-1.5, 1-1.5, 1.2-1.5, 0.2-1.2, 0.5-1.2, 0.8∼-.2, or 1-.2. If the content of (CF₂O) group is higher, the perfluoropolyether has a slightly lower thermal stability, and if the content of (R) group is higher, the perfluoropolyether has an increased viscosity, and the difficulty of the cladding process increases.

In some embodiments, the positive electrode active material matrix may be a material known in the art for use in a secondary battery. For example, the positive electrode active material matrix comprises a material capable of shedding and embedding an active ion. Optionally, the active ion comprises at least one of lithium ion, or sodium ion. Further optionally, the active ion comprises lithium ion.

When the secondary battery of the present application is a lithium-ion battery, the positive electrode active material matrix may include a material capable of shedding and embedding lithium ions. Optionally, the positive electrode active material matrix includes at least one of a lithium transition metal oxide, a lithium-containing phosphate with olivine structure, and their respective modified compounds. Examples of lithium transition metal oxide may include, but are not limited to, at least one of lithium cobalt oxides, lithium nickel oxides, lithium manganese oxides, lithium nickel cobalt oxides, lithium nickel manganese oxides, lithium nickel cobalt manganese oxides, lithium nickel cobalt aluminum oxides and their modified compounds. Examples of lithium-containing phosphates with olivine structure may include, but are not limited to, and at least one of lithium iron phosphate, a composite of lithium iron phosphate and carbon, lithium manganese phosphate, a composite of lithium manganese phosphate and carbon, lithium manganese ferric phosphate, a composite of lithium manganese ferric phosphate and carbon, and their respective modified compounds. However, the present application is not limited to these materials.

In some embodiments, in order to further increase the energy density of the secondary battery, the positive electrode active material matrix for a lithium-ion battery may include at least one of the lithium transition metal oxide as shown in Formula 1 and its modified compounds,

LiₐNi_{b}Co_{c}M_{d}OₑA_{f} Formula 1

in Formula 1, 0.8≤a≤1.2, 0.5≤b < 1, 0 <c< 1, 0 <d< 1, 1≤e≤2, 0 ≤f≤1, M is selected from at least one of Mn, Al, Zr, Zn, Cu, Cr, Mg, Fe, V, Ti and B, A is selected from at least one of N, F, S and Cl.

As an example, the positive electrode active material matrix for a lithium-ion battery may include at least one of LiCoO₂, LiNiO₂, LiMnO₂, LiMn₂O₄, LiNi_{1/3}Co_{1/3}Mm_{1/3}O₂ (NCM333, LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery of the present application is a sodium-ion battery, the positive electrode active material matrix may include a material capable of shedding and embedding sodium ions. Optionally, the positive electrode active material matrix includes at least one of a sodium-containing transition metal oxide, a polyanionic material (such as phosphate, fluorophosphate, pyrophosphate, sulfate, etc.), and Prussian blue materials. However, the present application is not limited to these materials.

As an example, the positive electrode active material matrix for a sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mm_{1/3}O₂, NaFePO₄, NaMnPO₄, NaCoPO₄, Prussian blue materials, and material having a the general formula of AₐM_{b}(PO_{4c},OₓY₃₋ₓ,. A is selected from at least one of H⁺, Li⁺, Na⁺, K⁺ and NH4⁺; M is a transition metal cation, optionally at least one of V, Ti, Mn, Fe, Co, Ni, Cu and Zn; Y is a halogen anion, optionally at least one of F, Cl and Br; 0 < a≤4; 0 < b≤2; 1<c<3; 0≤x≤2.

In some embodiments, the positive electrode active material comprises a positive electrode active material matrix and a protective layer, wherein the protective layer is arranged on the surface of the positive electrode active material matrix and comprises perfluoropolyether with a number average molecular weight of 200 to 16000, optionally 2000 to 10000. The perfluoropolyether comprises at least one compound of Formula 1 to Formula 9,

Rₐ-(CF₂CF₂CF₂O)ₘ-(CF₂O)ₙ-(CF₂)_{y}-R_{b} Formula 1

Rₐ-[C(CF₃)FCF₂O]ₘ-(CF₂O)ₙ-(CF₂)_{y}-R_{b} Formula 2

Rₐ-[C(CF₂CF₃)FCF₂O]ₘ-(CF₂O)ₙ-(CF₂)_{y}-R_{b} Formula 3

Rₐ-[C(CF₂CF₃)FCF₂CF₂O]ₘ-(CF₂O)ₙ-(CF₂)_{y}-R_{b} Formula 4

Rₐ-(CF₂CF₂O)ₘ-(CF₂O)ₙ-(CF₂)_{y}-R_{b} Formula 5

Rₐ-[C(CF₃)FCF₂O]ₘ-(CF₂)_{y}-R_{b} Formula 6

Rₐ-(CF₂CF₂CF₂O)ₘ-(CF₂)_{y}-R_{b} Formula 7

Rₐ-(CF₂CF₂O)ₘ-(CF₂)_{y}-R_{b} Formula 8

Rₐ-(CF₂CF₂CF₂CF₂O)ₘ-(CF₂)_{y}-R_{b} Formula 9.

y represents 0, 1, 2, or 3. m represents an integer between 3 and 120; optionally, m represents an integer between 3 and 100; more optionally, m represents an integer between 3 and 85; more optionally, m represents an integer between 3 and 68; in particular, m represents an integer between 3 and 45. n represents an integer between 3 and 120; optionally, n represents an integer between 3 and 100; more optionally, n represents an integer between 3 and 85; more optionally, n represents an integer between 3 and 68; in particular, n represents an integer between 3 and 45. m/n is 0.2 to 25, and optionally 0.8 to 1.2.

In the present application, the perfluoropolyether may be commercially available or synthesized according to conventional methods. For example, the perfluoropolyether may be obtained by anionic ring-opening polymerization of a fluorine-containing epoxide, by photooxidative polymerization of fluorolefin, by copolymerization of a fluorine ether with fluorolefin, by direct fluorination of a polyether, by fluorination reduction of a polyester, etc. The fluorine-containing epoxide used in the anionic ring-opening polymerization is most commonly hexafluoropropylene oxide and tetrafluoroepoxybutane, and the fluorolefin used in the photooxidation polymerization is most commonly tetrafluoroethylene and hexafluoropropylene.

### Preparation method

A second aspect of the present application provides a method for preparing the positive electrode active material.

In some embodiments, the preparation method comprises the following steps: S101, providing a positive electrode active material matrix and perfluoropolyether with a number average molecular weight of 200 to 16000; and S102, adding the positive electrode active material matrix and the perfluoropolyether to a solvent, and then dispersing evenly, standing, filtering and drying, to obtain a positive electrode active material. There is no special limitation on the order of addition of each material, which can be added to the solvent one by one, and can also be added to the solvent together.

The method for preparing a positive electrode active material of the present application has advantages of simple process, good product consistency, and easy to realize large-scale production.

In some embodiments, the reaction temperature in S102 may be room temperature, or a slightly heated temperature, for example, 100 °C or less. Optionally, the reaction temperature in S102 is 25 °C to 100 °C, 25 °C to 80 °C, 25 °C to 60 °C, or 25 °C to 40 °C.

In some embodiments, the dispersing in S102 may be an ultrasonic dispersion. Optionally, the time of the ultrasonic dispersion is more than 0.5 hour; further optionally, more than 1 hour; and further optionally, more than 2 hours.

The present application has no particular limitation on the type of the solvent, and may selecte any well-known organic small molecule compound capable of dispersing the perfluoropolyether. In some embodiments, the solvent includes but is not limited to at least one of ethanol, acetone, and diethyl ether.

### Secondary Battery

A third aspect of the present application provides a secondary battery comprising a positive electrode plate, a negative electrode plate and an electrolytic solution. During the charging and discharging process of the battery, active ions are embedded and shed back and forth between the positive electrode plate and the negative electrode plate. The electrolytic solution functions to conduct active ions between the positive electrode plate and the negative electrode plate.

### [Positive electrode plate]

In some embodiments, the positive electrode plate comprises a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application. For example, the positive electrode current collector has two surfaces opposite to each other in the direction of its own thickness, and the positive electrode film layer is provided on either or both of two opposite surfaces of the positive electrode current collector.

In some embodiments, the positive electrode current collector may be a metal foil or a composite current collector. As an example of a metal foil, an aluminum foil may be used. The composite current collector may comprise a polymeric material matrix and a metallic material layer formed on at least one surface of the polymeric material matrix. As an example, the metallic material may include at least one of aluminum, aluminum alloy, nickel, nickel alloy, titanium, titanium alloy, silver, and silver alloy. As an example, the polymer material matrix may include at least one of polypropylene (PP), polyethylene terephthalate (PET), polybutylene terephthalate (PBT), polystyrene (PS), polyethylene (PE), etc.

In some embodiments, the positive electrode film layer may further optionally comprise a binder. As an example, the binder for used in the positive electrode film layer may include but not limited to at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer may further optionally comprise a conductive agent. As an example, the conductive agent for used in the positive electrode film layer may include but not limited to at least one of superconducting carbon, conductive graphite, acetylene black, carbon black, Ketjen black, carbon dots, carbon nanotubes, graphene, and carbon nanofibers.

The positive electrode film layer is usually made by applying a positive electrode slurry to the positive electrode current collector followed by drying and cold pressing. The positive electrode slurry is usually formed by dispersing the positive electrode active material, an optional conductive agent, an optional binder, and any other components in a solvent and stirring thoroughly. The solvent may be N-methylpyrrolidone (NMP), but is not limited thereto.

### [Negative electrode plate]

In some embodiments, the negative electrode plate comprises a negative electrode current collector and a negative electrode film layer provided on at least one surface of the negative electrode current collector. For example, the negative electrode current collector has two surfaces opposite to each other in the direction of its own thickness, and the negative electrode film layer is provided on either or both of two opposite surfaces of the negative electrode current collector.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may include at least one of copper, copper alloy, nickel, nickel alloy, titanium, titanium alloy, silver, and silver alloy. As an example, the polymer material matrix may include at least one of polypropylene (PP), polyethylene terephthalate (PET), polybutylene terephthalate (PBT), polystyrene (PS), polyethylene (PE), etc.

The negative electrode film layer typically comprises a negative electrode active material, an optional binder, an optional conductive agent, and other optional adjuvants. The negative electrode film layer is usually made by applying a negative electrode slurry to the negative electrode current collector followed by drying and cold pressing. The negative electrode slurry is usually formed by dispersing the negative electrode active material, an optional conductive agent, an optional binder, and other optional adjuvants in a solvent and stirring thoroughly. The solvent may be N-methylpyrrolidone (NMP) or deionized water, but is not limited thereto. As an example, the binder for used in the negative electrode film layer may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS). As an example, the conductive agent for used in the negative electrode film layer may include at least one of superconducting carbon, conductive graphite, acetylene black, carbon black, Ketjen black, carbon dots, carbon nanotubes, graphene, and carbon nanofibers. The other optional adjuvants may include thickeners, e.g., sodium carboxymethyl cellulose (CMC-Na), and PTC thermistor material, etc.

The negative electrode active material may be a negative electrode active material known in the art for use in the secondary battery. As an example, the negative electrode active material may include at least one of natural graphite, artificial graphite, soft carbon, hard carbon, mesophase carbon micro beads, silicon-based material, tin-based material, lithium titanate, Li-Sn alloy, Li-Sn-O alloy, and Li-Al alloy. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for the secondary battery may also be used. These negative electrode active materials can be used alone, or in combination of two or more materials.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer cladding the surface of the negative electrode film layer.

### [Electrolytic solution]

The electrolytic solution of the present application may include at least one of lithium difluorophosphate (LiPO₂F₂), lithium difluoro(oxalato)borate (LiDFOB). For example, in some embodiments, the electrolytic solution includes lithium difluorophosphate; in some embodiments, the electrolytic solution includes lithium difluoro(oxalato)borate; and in some embodiments, the electrolytic solution includes both lithium difluorophosphate and lithium difluoro(oxalato)borate.

After a protective layer including perfluoropolyether is arranged on the surface of the positive electrode active material substrate, the impedance of the positive electrode interface may be slightly increased, so that the dynamic performance of secondary battery may be affected. After a lot of research, the inventors of the present application found that adding at least one of lithium difluorophosphate and lithium difluoro(oxalato)borate to the electrolytic solution can reduce the interface impedance of the positive electrode, increase the migration rate of the active ions, and improve the cycling performance and dynamic performance of secondary battery.

Although the mechanism is unclear yet, the inventors of the present application speculate that the possible reasons are as follows: firstly, lithium difluorophosphate and lithium difluoro(oxalato)borate may form interface film with a low impedance on the surface of the positive electrode active material, reduce the decomposition of the electrolytic solution and the erosion of the electrolytic solution on the positive electrode active material, and reduce the leaching out of transition metal ions and a series of resultant side reactions; secondly, lithium difluorophosphate, and lithium difluoro(oxalato)borate can improve the conductivity of the electrolytic solution, thereby improving the dynamic performance of secondary battery; and thirdly, the B atom in lithium difluoro(oxalato)borate easily binds to the O atom in the positive electrode active material, thereby reducing the charge transfer impedance of the positive electrode active material and the internal resistance of the battery.

The lithium difluorophosphate has a poor solubility in the electrolytic solution. If the added amount of lithium difluorophosphate is too high, it will deteriorate the viscosity of the electrolytic solution, thereby reducing the ionic conductivity of the electrolytic solution to a certain extent. Therefore, the added amount of lithium difluorophosphate should not be too high. In some embodiments, the lithium difluorophosphate is present in a weight percentage of ≤2%, optionally, ≤1.8%, <_1.6%, <_1.4%, <_1.2%, <_1%, <_0.8%, or ≤0.6%, based on the total weight of the electrolytic solution.

Meanwhile, if the content of lithium difluorophosphate is low, the improvement effect on the interface impedance of the positive electrode and the dynamic performance of the secondary battery may be not significant. In some embodiments, optionally, the lithium difluorophosphate is present in a weight percentage of 0.1%-2%, 0.2%-2%, 0.3%-2%, 0.4%-2%, 0.5%-2%, 0.1%-1.8%, 0.2%-1.8%, 0.3%-1.8%, 0.4%-1.8%, 0.5%-1.8%, 0.1%-1.4%, 0.2%-1.4%, 0.3%-1.4%, 0.4%-1.4%, 0.5%-1.4%, 0.1%-1%, 0.2%-1%, 0.3%-1%, 0.4%-1%, or 0.5%-1%, based on the total weight of the electrolytic solution.

Lithium difluoro(oxalato)borate itself is not resistant to oxidation. If the added amount of lithium difluoro(oxalato)borate is too high, it will deteriorate the storage performance of the secondary battery, especially at high temperature. Therefore, the added amount of lithium difluoro(oxalato)borate should not be too high. In some embodiments, the lithium difluoro(oxalato)borate is present in a weight percentage of ≤2%, based on the total weight of the electrolytic solution. Optionally, the lithium difluoro(oxalato)borate is present in a weight percentage of ≤1.8%, <_1.6%, <_1.4%, <_1.2%, <_1%, <_0.8%, or ≤0.6%.

Meanwhile, if the content of lithium difluoro(oxalato)borate is low, the improvement effect on the interface impedance of the positive electrode and the dynamic performance of the secondary battery may be not significant. In some embodiments, optionally, the lithium difluoro(oxalato)borate is present in a weight percentage of 0.1%-2%, 0.2%-2%, 0.3%-2%, 0.4%-2%, 0.5%-2%, 0.1%-1.8%, 0.2%-1.8%, 0.3%-1.8%, 0.4%-1.8%, 0.5%-1.8%, 0.1%-1.4%, 0.2%-1.4%, 0.3%-1.4%, 0.4%-1.4%, 0.5%-1.4%, 0.1%-1%, 0.2%-1%, 0.3%-1%, 0.4%-1%, or 0.5%-1%, based on the total weight of the electrolytic solution.

In some embodiments, the electrolytic solution includes an electrolyte salt and an organic solvent. The types of electrolyte salt and organic solvent are not specifically restricted in the present application, and can be selected by those skilled in the art according to actual requirements.

When the secondary battery of the present application is a lithium-ion battery, in particular a lithium-ion secondary battery, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium dioxalate borate (LiBOB), lithium difluorodioxalate phosphate (LiDFOP) and lithium tetrafluorooxalate phosphate (LiTFOP).

When the secondary battery of the present application is a sodium-ion battery, as an example, the electrolyte salt may comprise at least one of sodium hexafluorophosphate (NaPF₆), sodium tetrafluoroborate (NaBF₄), sodium perchlorate (NaClO₄), sodium hexafluorarsenate (NaAsF₆), sodium bisfluorosulfonylimide (NaFSI), sodium bistrifluoromethylsulfonamide (NaTFSI), sodium trifluoromethylsulfonate (NaTFS), sodium difluorooxalate borate (NaDFOB), sodium borate dioxalate (NaBOB), sodium difluorophosphate (NaPO₂F₂), sodium difluorophosphate dioxalate phosphate (NaDFOP), and sodium tetrafluorooxalate phosphate (NaTFOP).

As an example, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In the present application, the electrolytic solution does not exclude components other than those described above. In some embodiments, the electrolytic solution also optionally includes other additives, for example, an additive to improve the overcharge performance of the battery, an additive to improve the high temperature performance of the battery, an additive to improve the low temperature power performance of the battery, etc.

In the present application, the electrolytic solution can be prepared according to a method conventional in the art. For example, an organic solvent, an electrolyte salt, lithium difluorophosphate and/or lithium difluoro(oxalato)borate may be mixed thoroughly to obtain an electrolytic solution. There is no special restriction on the addition order of each material. For example, the electrolyte salt, lithium difluorophosphate and/or lithium difluoro(oxalato)borate are added to the organic solvent and mixed thoroughly to obtain an electrolytic solution; alternatively, the electrolyte salt is first added to the organic solvent, and then the lithium difluorophosphate and/or lithium difluoro(oxalato)borate are added to the organic solvent and mixed thoroughly to obtain the electrolytic solution.

### [Separator]

The secondary battery may further include separators. The separators are arranged between the positive electrode plate and the negative electrode plate to play the role of isolation. There is no particular limitation on the type of separator in the present application, and any well-known porous-structure separator with good chemical stability and mechanical stability may be used.

In some embodiments, materials of the separator may be selected from one or more of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

In some embodiments, the secondary battery may include an outer package. The outer package may be used to encapsulate the electrode assembly and the electrolytic solution.

In some embodiments, the outer package of the secondary battery may be a hard case, such as a hard plastic case, an aluminum case, a steel case, and the like. The outer package of the secondary battery may also be a soft package, such as a pouch-type soft package. The material of the soft bag can be plastic, such as at least one of polypropylene (PP), polybutylene terephthalate (PBT), and polybutylene succinate (PBS).

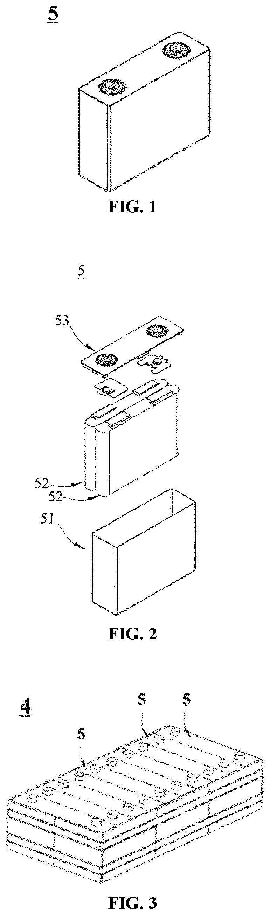

The present application does not have particular limitation to the shape of the secondary battery. The secondary battery may be cylindrical, square, or in other arbitrary shape. Fig. 1 shows a secondary battery 5 with a square structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or laminated to form an electrode assembly 52, which is encapsulated in the receiving cavity. A non-aqueous electrolytic solution is infiltrated into the electrode assembly 52. The number of electrode assemblies 52 contained in the secondary battery 5 may be one or more, which may be adjusted according to the demand.

In some embodiments of the present application, the secondary battery according to the present application can be assembled into a battery module, and the number of secondary battery contained in the battery modules can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

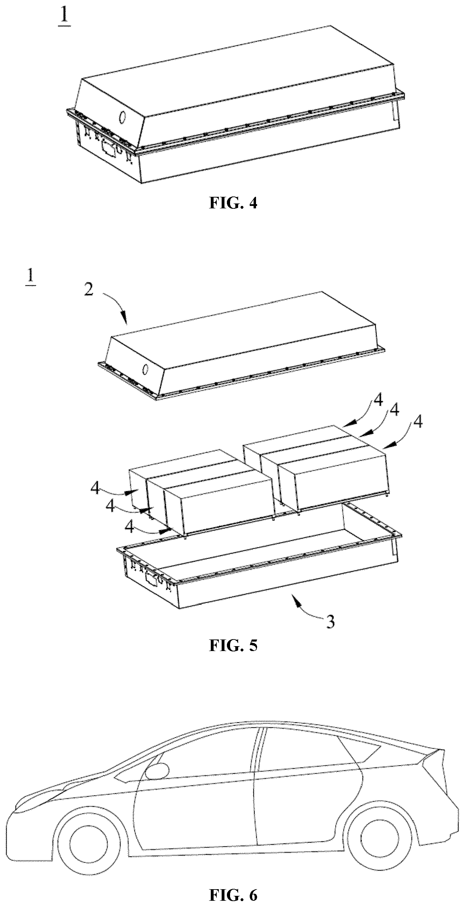

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fourth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### Preparation of positive electrode active material

At room temperature, the positive electrode active material matrix LiNi_{0.8}Co_{0.1}Mn_{0.1}O₂ and perfluoropolyether at a weight ratio of 99.8:0.2 were added to ethanol as a solvent for ultrasonic dispersion for more than 2 hours, after standing, filtering and drying, the positive electrode active material was obtained. The perfluoropolyether has a general formula of Rₐ-[C(R_{f})F(CF₂)ₓO]ₘ-(CF₂O)ₙ-(CF₂)_{y}-R_{b}, [C(R_{f})F(CF₂)ₓO] and (CF₂O) are randomly distributed, Rₐ, R_{b}, R_{f}, x, y, m, and n are defined in Table 1.

### Preparation of positive electrode plate

The prepared positive electrode active material, acetylene black as a conductive agent, and polyvinylidene fluoride (PVDF) as a binder at a weight ratio of 98:1:1 were added to a suitable amount of solvent NMP, stirred and mixed thoroughly to form a positive electrode slurry. The positive electrode slurry was then uniformly applied to the surface of aluminum foil as a positive electrode current collector, dried at room temperature, and then transferred to an oven at 120°C for drying for 1 hour, and then cold pressed, and slit to obtain a positive electrode plate.

### Preparation of negative electrode plate

Graphite as a negative active material, carbon black (Super P) as a conductive agent, and aqueous acrylic resins as a binder at a weight ratio of 92:2:6 were dissolved in a suitable solvent deionized water, which was stirred and mixed thoroughly to form a negative electrode slurry. The negative electrode slurry was uniformly applied to the surface of copper foil as a negative electrode current collector, dried at room temperature, and then transferred to an oven at 120°C for drying for 1 hour, and then cold pressed, and slit to obtain a negative electrode plate.

### Separator

### Porous polyethylene (PE) film is used as the separator.

### Preparation of electrolytic solution

Ethylene carbonate (EC), ethylmethylmethane carbonate (EMC) and diethyl carbonate (DEC) were mixed at a volume ratio of 1:1:1 to obtain an organic solvent; LiPF₆ and lithium difluorophosphate were uniformly dissolved in the above organic solvent to obtain an electrolytic solution, wherein the concentration of LiPF₆ was 1 mol/L, and the weight percentage of lithium difluorophosphate was 0.5%, based on the total weight of the electrolytic solution.

### Preparation of secondary battery

The positive electrode plate, separator and negative electrode plate were stacked and wound in order to obtain an electrode assembly; the electrode assembly was put into the outer package, the electrolytic solution was added, and the secondary battery was obtained after the processes such as packaging, standing, forming and aging.

### Examples 2-35 to Comparative Examples 1-2

The preparation method of the secondary battery was the same as those in Example 1 with the exception that the parameters of the preparations of the positive electrode active material and the electrolytic solution are different, as detailed in Table 1.

**Table 1**

| No. | Rₐ | R_{b} | R_{f} | x | y | m | n | Positive electrode active material matrix: Perfluoropolyether | LiPO₂F₂ | LiDFOB |
|---|---|---|---|---|---|---|---|---|---|---|
| Example 1 | CF₃O | CF₃ | F | 2 | 0 | 20 | 20 | 99.8:0.2 | 0.5% | / |
| Example 2 | CF₃O | CF₃ | F | 2 | 0 | 20 | 20 | 99.5:0.5 | 0.5% | / |
| Example 3 | CF₃O | CF₃ | F | 2 | 0 | 20 | 20 | 99.0:1.0 | 0.5% | / |
| Example 4 | CF₃O | CF₃ | F | 2 | 0 | 20 | 20 | 98.5:1.5 | 0.5% | / |
| Example 5 | CF₃O | CF₃ | F | 2 | 0 | 20 | 20 | 98.0:2.0 | 0.5% | / |
| Example 6 | CF₃O | CF₃ | F | 2 | 0 | 20 | 20 | 97.5:2.5 | 0.5% | / |
| Example 7 | CF₃O | CF₃ | F | 2 | 0 | 20 | 20 | 99.0:1.0 | / | / |
| Example 8 | CF₃O | CF₃ | F | 2 | 0 | 20 | 20 | 99.0:1.0 | 1.0% | / |
| Example 9 | CF₃O | CF₃ | F | 2 | 0 | 20 | 20 | 99.0:1.0 | 2.0% | / |
| Example 10 | CF₃O | CF₃ | F | 2 | 0 | 20 | 20 | 99.0:1.0 | / | 0.50% |
| Example 11 | CF₃O | CF₃ | F | 2 | 0 | 1 | 1 | 99.0:1.0 | 0.5% | / |
| Example 12 | CF₃O | CF₃ | F | 2 | 0 | 4 | 4 | 99.0:1.0 | 0.5% | / |
| Example 13 | CF₃O | CF₃ | F | 2 | 0 | 8 | 8 | 99.0:1.0 | 0.5% | / |
| Example 14 | CF₃O | CF₃ | F | 2 | 0 | 25 | 25 | 99.0:1.0 | 0.5% | / |
| Example 15 | CF₃O | CF₃ | F | 2 | 0 | 45 | 45 | 99.0:1.0 | 0.5% | / |
| Example 16 | CF₃O | CF₃ | F | 2 | 0 | 68 | 68 | 99.0:1.0 | 0.5% | / |
| Example 17 | CF₃O | CF₃ | F | 2 | 0 | 85 | 17 | 99.0:1.0 | 0.5% | / |
| Example 18 | CF₃O | CF₃ | F | 2 | 0 | 31 | 155 | 99.0:1.0 | 0.5% | / |
| Example 19 | CF₃O | CF₃ | F | 1 | 0 | 1 | 1 | 99.0:1.0 | 0.5% | / |
| Example 20 | CF₃O | CF₃ | F | 1 | 0 | 5 | 5 | 99.0:1.0 | 0.5% | / |
| Example 21 | CF₃O | CF₃ | F | 1 | 0 | 85 | 85 | 99.0:1.0 | 0.5% | / |
| Example 22 | CF₃O | CF₃ | F | 1 | 0 | 120 | 24 | 99.0:1.0 | 0.5% | / |
| Example 23 | CF₃O | CF₃ | F | 1 | 0 | 35 | 175 | 99.0:1.0 | 0.5% | / |
| Example 24 | CF₃CF₂CF₂O | CF(CF₃)CF₃ | CF₃ | 1 | 0 | 1 | / | 99.0:1.0 | 0.5% | / |
| Example 25 | CF₃CF₂CF₂O | CF(CF₃)CF₃ | CF₃ | 1 | 0 | 10 | / | 99.0:1.0 | 0.5% | / |
| Example 26 | CF₃CF₂CF₂O | CF(CF₃)CF₃ | CF₃ | 1 | 0 | 94 | / | 99.0:1.0 | 0.5% | / |
| Example 27 | CF₃CF₂CF₂O | CF₃ | F | 2 | 1 | 1 | / | 99.0:1.0 | 0.5% | / |
| Example 28 | CF₃CF₂CF₂O | CF₃ | F | 2 | 1 | 10 | / | 99.0:1.0 | 0.5% | / |
| Example 29 | CF₃CF₂CF₂O | CF₃ | F | 2 | 1 | 94 | / | 99.0:1.0 | 0.5% | / |
| Example 30 | F | F | F | 1 | 0 | 3 | / | 99.0:1.0 | 0.5% | / |
| Example 31 | F | F | F | 1 | 0 | 18 | / | 99.0:1.0 | 0.5% | / |
| Example 32 | F | F | F | 1 | 0 | 135 | / | 99.0:1.0 | 0.5% | / |
| Example 33 | F | F | F | 3 | 0 | 1 | / | 99.0:1.0 | 0.5% | / |
| Example 34 | F | F | F | 3 | 0 | 10 | / | 99.0:1.0 | 0.5% | / |
| Example 35 | F | F | F | 3 | 0 | 72 | / | 99.0:1.0 | 0.5% | / |
| Comparative Example 1 | / | / | / | / | / | / | / | / | / | / |
| Comparative Example 2 | CF₃O | CF₃ | F | 2 | 0 | 80 | 80 | 99.0:1.0 | 0.5% | / |

### Test section

### (1) High-temperature storage performance test

At 60°C, the secondary battery was charged to 4.35V with constant current of 0.5C, and further charged to 0.05C with constant voltage, at which time the thickness of the secondary battery was tested and recorded as h0. The secondary battery was stored in a 60°C incubator for 30 days and then took out, at which time the thickness of the secondary battery was tested and recorded as h1. The thickness expansion rate expansion rate of the secondary battery after 30 days of storage was used to characterize the high-temperature storage performance of the secondary battery. The smaller the thickness expansion rate of the secondary battery, the better the high-temperature storage performance.

The thickness expansion rate of secondary battery after 30 days of storage (%) = (h1-h0)/h0 × 100%

### (2) High-temperature cycling performance test

At 45°C, the secondary battery was charged to 4.25V with constant current of 1C, and further charged to 0.05C with constant voltage, at which time the secondary battery was fully charged, and the charging capacity was recorded as the charging capacity of the first cycle; the above secondary battery was allowed for standing for 5 minutes, charged to 2.8V with a constant current of 1C. This was a cyclic charge-discharge process, at which time the discharging capacity was recorded as the discharging capacity of the first cycle. The secondary battery was subjected to the cyclic charge-discharge processes as described above, and the discharging capacity for each cycle was recorded.

Capacity retention rate of the secondary battery of 800 cycles (%) = (discharging capacity of the 800th cycle/discharging capacity of the first cycle) ×100%.

### Table 2 shows the test results of Examples 1 to 35 and Comparative Examples 1 to 2.

**Table 2**

| No, | Thickness Expansion Rate after 30 days storage at 60°C /% | Capacity Retention Rate after 800 cycles at 45°C /% |
|---|---|---|
| Example 1 | 15.3 | 77.1 |
| Example 2 | 15.0 | 80.3 |
| Example 3 | 14.6 | 82.2 |
| Example 4 | 14.1 | 83.1 |
| Example 5 | 14.3 | 81.9 |
| Example 6 | 15.8 | 76.8 |
| Example 7 | 15.1 | 80.9 |
| Example 8 | 14.9 | 81.4 |
| Example 9 | 15.6 | 78.2 |
| Example 10 | 14.8 | 81.9 |
| Example 11 | 19.4 | 75.4 |
| Example 12 | 18.4 | 77.4 |
| Example 13 | 15.9 | 81.4 |
| Example 14 | 14.7 | 82.1 |
| Example 15 | 15.3 | 80.7 |
| Example 16 | 15.1 | 81.2 |
| Example 17 | 15.2 | 80.6 |
| Example 18 | 15.5 | 80.1 |
| Example 19 | 19.3 | 77.1 |
| Example 20 | 17.4 | 79.2 |
| Example 21 | 15.9 | 78.9 |
| Example 22 | 16.2 | 77.3 |
| Example 23 | 16.8 | 78.3 |
| Example 24 | 16.7 | 77.3 |
| Example 25 | 14.7 | 81.3 |
| Example 26 | 18.1 | 76.3 |
| Example 27 | 17.3 | 76.9 |
| Example 28 | 14.9 | 81.6 |
| Example 29 | 18.3 | 76.1 |
| Example 30 | 17.5 | 76.9 |
| Example 31 | 14.9 | 81.7 |
| Example 32 | 18.4 | 76.6 |
| Example 33 | 17.9 | 77.5 |
| Example 34 | 15.3 | 82.9 |
| Example 35 | 17.9 | 77.2 |
| Comparative Example 1 | 23.5 | 70.3 |
| Comparative Example 2 | 19.9 | 70.1 |

As can be seen from the test results in Table 2, perfluoropolyether with a suitable number average molecular weight is used as the protective layer of the positive electrode active material, which allows high energy density and good dynamic performance, as well as good high-temperature cycling performance and high-temperature storage performance. The possible reasons are as follows: firstly, perfluoropolyether has a high content of fluorine atoms in the molecular structure and high oxidation resistance, so as to reduce the erosion of the electrolytic solution on the positive electrode active material, and reduce the leaching out of transition metal ions and a series of resultant side reactions, such as destruction of the crystal structure of the positive electrode active material, poor capacity exertion, reduced energy density of secondary battery, and increased internal resistance of battery; and secondly, perfluoropolyether is disposed on the surface of the positive electrode active material matrix, and has a low solubility or is almost insoluble in the electrolytic solution, and thus it will not affect the performance of electrolytic solution. Therefore, the secondary battery may have high energy density and good dynamic performance.

In Comparative Example 2, perfluoropolyether with excessively high number average molecular weight is used as the protective layer of the positive electrode active material, and then the molecular chain is more than likely to be too long and has a poor thermal stability, so the improvement effects on the high-temperature cycling performance and high-temperature storage performance of the secondary battery are not good. In addition, the perfluoropolyether has an increased viscosity in this case, escalating the difficulty of the cladding process.

As can be seen from the test results of Examples 1 to 35, if the perfluoropolyether has a number average molecular weight of 200 to 16000, the perfluoropolyether has high electrochemical stability and thermal stability, so that the secondary battery has high-temperature storage performance and high-temperature cycling performance. Optionaly, the perfluoropolyether has a number average molecular weight of 1000 to 10000; further optionaly, the perfluoropolyether has a number average molecular weight of 2000 to 6000.

As can be seen from the test results of Examples 1 to 6, the content of the perfluoropolyether in the positive electrode active material should not be too high. If the content of the perfluoropolyether is high, the interface impedance of the positive electrode may increase and the transmission rate of the active ions may decrease, and then the high-temperature cycling performance and high-emperature storage performance of the secondary battery may become worse. Optionally, the perfluoropolyether is present in a weight percentage of ≤2%, based on the total weight of the positive electrode active material; further optionally, the perfluoropolyether is present in a weight percentage of 0.5% to 2%.

As can be seen from the test results of Examples 1 to 10, after adding lithium difluorophosphate or lithium difluoro(oxalato)borate to the electrolytic solution, secondary batteries may have a further improved high-temperature cycling performance and high-temperature storage performance. The possible reason lies in that after adding lithium difluorophosphate or lithium difluoro(oxalato)borate into the electrolytic solution, the interface impedance of positive electrode decreases and the migration rate of active ions increases.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode active material comprising:
a positive electrode active material matrix; and
a protective layer arranged on the surface of the positive electrode active material matrix and comprising perfluoropolyether with a number average molecular weight of 200 to 16000.

2. The positive electrode active material according to claim 1, wherein the perfluoropolyether has a number average molecular weight of 2000 to 10000.

3. The positive electrode active material according to claim 1 or 2, wherein the perfluoropolyether is present in a weight percentage of ≤ 2%, optionally 0.5% to 2%, based on the total weight of the positive electrode active material.

4. The positive electrode active material according to any one of claims 1 to 3, wherein the perfluoropolyether comprises a plurality of structural units distributed along the molecular chain, and the structural unit is selected from a group consisting of one or at least two of the following structural units:
(a) (CFXO), X represents F or CF₃,
(b) (CF₂CF₂O),
(c) (C₃F₆O), optionally (CF₂CF₂CF₂O), [C(CF₃)FCF₂O] or [CF₂C(CF₃)FO],
(d) (C₄F₈O), optionally (CF₂CF₂CF₂CF₂O), or [C(CF₂CF₃)FCF₂O], and
(e) (C₅F₁₀O), optionally [C(CF₂CF₃)FCF₂CF₂O],
a number of each of the above structural units is each independently selected from 0 or an integer above 1.

5. The positive electrode active material according to any one of claims 1 to 4, wherein the perfluoropolyether has a general formula of Rₐ-(R)ₘ-(CF₂O)ₙ-(CF₂)_{y}-R_{b} or Rₐ-(R)ₘ-(CF₂)_{y}-R_{b},
R each independently represents C(R_{f})F(CF₂)ₓO or (CF₂)ₓC(R_{f})FO, R_{f} represents F, CF₃, CF₂CF₃, CF₂CF₂CF₃, or CF(CF₃)CF₃, x represents 1, 2, or 3, and R has a number of carbon atoms of less than or equal to 5, optionally, Rf represents F, CF₃, or CF₂CF₃;
Rₐ represents F, CF₃, CF₂CF₃, CF₂CF₂CF₃, CF(CF₃)CF₃, OCF₃, OCF₂CF₃, OCF₂CF₂CF₃, OCF(CF₃)CF₃, CF₂COF, CF₂CF₂COF, or CF(CF₃)COF;
R_{b} represents F, CF₃, CF₂CF₃, CF₂CF₂CF₃, CF(CF₃)CF₃, CF₂COF, CF₂CF₂COF, or CF(CF₃)COF;
m represents an integer between 1 and 135, optionally, m represents an integer between 3 and 85, and further optionally, m represents an integer between 3 and 45;
n represents an integer between 1 and 175, optionally, n represents an integer between 3 and 85, and further optionally, n represents an integer between 3 and 45;
y represents 0, 1, 2, or 3.

6. The positive electrode active material according to claim 5, wherein (R) and (CF₂O) are randomly distributed.

7. The positive electrode active material according to claim 5 or 6, wherein m/n is 0.2 to 25, and optionally, m/n is 0.8 to 1.2.

8. The positive electrode active material according to any one of claims 5 to 7, wherein R each independently represents (CF₂CF₂O), (CF₂CF₂CF₂O), (CF₂CF₂CF₂CF₂O), [C(CF₃)FCF₂O], [C(CF₂CF₃)FCF₂O], or [C(CF₂CF₃)FCF₂CF₂O].

9. The positive electrode active material of any one of claims 5 to 8, wherein the perfluoropolyether comprises at least one compound of Formula 1 to Formula 9,
Rₐ-(CF₂CF₂CF₂O)ₘ-(CF₂O)ₙ-(CF₂)_{y}-R_{b} Formula 1
Rₐ-[C(CF₃)FCF₂O]ₘ-(CF₂O)ₙ-(CF₂)_{y}-R_{b} Formula 2
Rₐ-[C(CF₂CF₃)FCF₂O]ₘ-(CF₂O)ₙ-(CF₂)_{y}-R_{b} Formula 3
Rₐ-[C(CF₂CF₃)FCF₂CF₂O]ₘ-(CF₂O)ₙ-(CF₂)_{y}-R_{b} Formula 4
Rₐ-(CF₂CF₂O)ₘ-(CF₂O)ₙ-(CF₂)_{y}-R_{b} Formula 5
Rₐ-[C(CF₃)FCF₂O]ₘ-(CF₂)_{y}-R_{b} Formula 6
Rₐ-(CF₂CF₂CF₂O)ₘ-(CF₂)_{y}-R_{b} Formula 7
Rₐ-(CF₂CF₂O)ₘ-(CF₂)_{y}-R_{b} Formula 8
Rₐ-(CF₂CF₂CF₂CF₂O)ₘ-(CF₂)_{y}-R_{b} Formula 9.

10. The positive electrode active material according to any one of claims 5 to 9, wherein the perfluoropolyether comprises at least one of the following compounds: CF₃O(CF₂CF₂CF₂O)ₘ(CF₂O)ₙCF₃, CF₃CF₂O(CF₂CF₂CF₂O)ₘ(CF₂O)ₙCF₃, CF₃CF₂O(CF₂CF₂CF₂O)ₘ(CF₂O)ₙ(CF₂)₂C(CF₃)FCF₃, CF₃(CF₂CF₂CF₂O)ₘ(CF₂O)ₙCF₂CF₃, CF₃O[C(CF₃)FCF₂O]ₘ(CF₂O)ₙCF₃, CF₃O[C(CF₃)FCF₂O]ₘ(CF₂O)ₙCF₂CF₂CF₃, CF₃[C(CF₃)FCF₂O]ₘ(CF₂O)ₙCF₂CF₃, CF₃CF₂[C(CF₃)FCF₂O]ₘ(CF₂O)ₙCF₂CF₃, CF₃C(CF₃)F[C(CF₂CF₃)FCF₂O]ₘ(CF₂O)ₙ(CF₂)₃CF(CF₃)CF₃, CF₃C(CF₃)F[C(CF₂CF₃)FCF₂O]ₘ(CF₂O)ₙ(CF₂)₂CF(CF₃)CF₃, CF₃CF(CF₃)O[C(CF₂CF₃)FCF₂CF₂O]ₘ(CF₂O)ₙ(CF₂)₂CF(CF₃)CF₃, F(CF₂CF₂O)ₘ(CF₂O)ₙF, CF₃(CF₂CF₂O)ₘ(CF₂O)ₙ(CF₂)₂CF₃, CF₃O(CF₂CF₂O)ₘ(CF₂O)ₙCF₃, CF₃CF₂CF₂O[C(CF₃)FCF₂O]ₘCF(CF₃)CF₃, CF₃CF₂CF₂O[C(CF₃)FCF₂O]ₘCF(CF₃)COF, CF₃CF₂CF₂O(CF₂CF₂CF₂O)ₘCF₂CF₃, F(CF₂CF₂O)ₘF, or F(CF₂CF₂CF₂CF₂O)ₘF.

11. The positive electrode active material according to any one of claims 1 to 10, wherein the positive electrode active material matrix comprises a material capable of shedding and embedding an active ion, optionally the active ion comprises at least one of lithium ion, or sodium ion, and further optionally, the active ion comprises lithium ion.

12. A method for preparing a positive electrode active material, comprising the following steps:
S101, providing a positive electrode active material matrix and perfluoropolyether with a number average molecular weight of 200 to 16000; and
S102, adding the positive electrode active material matrix and the perfluoropolyether to a solvent, and then dispersing evenly, standing, filtering and drying, to obtain a positive electrode active material.

13. A secondary battery comprising a positive electrode plate, a negative electrode plate and an electrolytic solution, wherein the positive electrode plate comprises the positive electrode active material according to any one of claims 1 to 11, or the positive electrode active material prepared by the method according to claim 12.

14. The secondary battery according to claim 13, wherein the electrolytic solution comprises at least one of lithium difluorophosphate, and lithium difluoro(oxalato)borate,
optionally, the lithium difluorophosphate is present in a weight percentage of ≤2%, based on the total weight of the electrolytic solution;
optionally, the lithium difluoro(oxalato)borate is present in a weight percentage of ≤2%, based on the total weight of the electrolytic solution.

15. An electrical device comprising a secondary battery according to claim 13 or 14.
